# EUROPEAN PATENT SPECIFICATION

(11) **EP 3 961 501 B1**
(45) Date of publication and mention of the grant of the patent: **18.02.2026**
(21) Application number: 21164426.5
(22) Date of filing: 23.03.2021
(51) Int. Cl.: G06F 18/243, G06V 10/77, G06V 10/776, G06V 10/774

(54) **COMPUTER VISION TRANSACTION MONITORING**
COMPUTERSICHTTRANSAKTIONSÜBERWACHUNG
SURVEILLANCE DE TRANSACTION DE VISION INFORMATIQUE

(30) Priority: 27.08.2020 US 202017004154
(43) Date of publication of application: 02.03.2022
(73) Proprietor: NCR Voyix Corporation, Atlanta, GA 30308-1007 (US)
(72) Inventor: HEMMATIYAN, Shayan, Belmont, MA (US); MIGDAL, Joshua, Wayland, MA 01778 (US)
(74) Representative: Secerna LLP

(56) References cited:
- US-A- 5 883 968
- US-A1- 2015 054 959
- MARCELINO PEDRO: "Transfer learning from pre-trained models", 23 October 2018 (2018-10-23), XP093243463, Retrieved from the Internet <URL:https://towardsdatascience.com/transfer-learning-from-pre-trained-models-f2393f124751> [retrieved on 20250127]
- LAU SUKI: "Learning Rate Schedules and Adaptive Learning Rate Methods for Deep Learning", TOWARDS DATA SCIENCE, 29 July 2017 (2017-07-29), XP093243803, Retrieved from the Internet <URL:https://towardsdatascience.com/learning-rate-schedules-and-adaptive-learning-rate-methods-for-deep-learning-2c8f433990d1> [retrieved on 20250127]
- GARCIA-DOMINGUEZ MANUEL ET AL: "FrImCla: A Framework for Image Classification Using Traditional and Transfer Learning Techniques", IEEE ACCESS, IEEE, USA, vol. 8, 12 March 2020 (2020-03-12), pages 53443 - 53455, XP011780292, DOI: 10.1109/ACCESS.2020.2980798
- CHITROUB S ET AL: "Principal component analysis of multispectral images using neural network", COMPUTER SYSTEMS AND APPLICATIONS, ACS/IEEE INTERNATIONAL CONFERENCE O N. 2001 BEIRUT, LEBANON 25-29 JUNE 2001, LOS ALAMITOS, CA, USA,IEEE COMPUT. SOC, US, 25 June 2001 (2001-06-25), pages 89 - 95, XP010551192, ISBN: 978-0-7695-1165-8, DOI: 10.1109/AICCSA.2001.933956

## Description

Retailers have embraced self-checkout technology where their customers perform self-scanning of item barcodes at Self-Service Terminals (SSTs) without cashier assistance. At first customers were reluctant to perform self-checkouts but over the years, customers have grown accustomed to the technology and have embraced it. As a result, a substantial amount of transactions are now self-checkouts and retailers have been able to reallocate staff typically associated with performing cashier-assisted checkouts to other needed tasks of the enterprises.

However, theft has become a significant concern of the retailers during self-checkouts. One common form of theft during a self-checkout is referred to as ticket switching. With ticket switching, a customer replaces a more expensive item barcode for a higher-priced item with a less expensive item barcode associated with a lower-priced item. The customer then swipes the less expensive item barcode during a self-checkout for the higher-priced item, which appears to any staff monitoring the SST as if the customer is properly scanning each item in the customer transaction, and which may not trigger any security concerns from the SST.

Ticket switching can also occur with cashier-assisted transactions at a Point-Of-Sale (POS) terminal, but an attentive cashier may recognize during scanning that what was scanned does not correspond with what shows up on the transaction display for what is actually being purchased. Some cashiers may also inadvertently or intentionally ignore any concerns associated with ticket switching during cashier-assisted transactions, such that ticket switching can also be a problem with assisted checkouts.

Existing computer vision-based approaches to ticket switching take too long of a response time to recognize that a scanned item image does not correspond to the item details returned for the item barcode. As a result, these approaches have been impractical because they slow the transaction scanning times down to levels that are intolerable to most customers, generate long customer queues at the SSTs or POS terminals, and generate too many false positive results for ticket switching, which forces transaction interruptions until the false positives can be cleared by attendants or supervisors. Examples of relevant prior art are: US 2015/054959 A1 (HE CHAO [HK] ET AL) 26 February 2015 (2015-02-26) and US 5 883 968 A (WELCH CHARLES W [US] ET AL) 16 March 1999 (1999-03-16).

As a result, a practical, processing efficient, and more precise (accurate) technique is needed to address ticket switching during checkouts. The scope of the invention is defined by the appended claims.

In various embodiments, methods and a system for computer vision-based ticket switching detection are presented.

According to a first aspect of the present invention there is provided a method, comprising passing an item image captured for an item to a first trained machine-learning algorithm trained as a modified Convolutional Neural Network, CNN; obtaining a feature vector as output from the first trained machine-learning algorithm; selecting a second trained machine-learning algorithm based on an item code scanned from the item; wherein the second trained machine-learning algorithm comprises an item classifier; providing the feature vector as input to the second trained machine-learning algorithm; receiving an indication from the second trained machine-learning algorithm as to whether the feature vector is associated with the item code, is not associated with the item code, or that a decision cannot be made based on the feature vector whether or not the feature vector is associated with the item code**;** and when the indication is that a decision cannot be made, sending a notification to a transaction terminal to request an operator of the transaction terminal to rescan the item code of the item that results in a new item image being captured and iterating back to the passing with the new item image as the item image.

Aptly, passing further includes obtaining the item image during a transaction for the item at the transaction terminal as the item is scanned by a scanner of the transaction terminal.

Aptly, selecting further includes obtaining the item code from a transaction manager of the transaction terminal when the scanner provides the item code to the transaction manager.

Aptly, the method further comprises sending an alert to the transaction manager to suspend the transaction when the indication indicates that the feature vector is not associated with the item code.

According to a second aspect not covered by the present invention there is provided a method, comprising training a first machine-learning algorithm on first item images for a first set of items to produce feature vectors for each item in the first set of items based on the corresponding first item images; testing the first machine-learning algorithm on new item images associated with new items that were not present in the first set of items and that were not present in the first item images; receiving new feature vectors from the first machine-learning algorithm based on the new item images that are projected into a feature space associated with the first set of items; training second machine-learning algorithms on the new feature vectors to identify the new items based on the new feature vectors; associating each of the second machine-learning algorithms with an item code associated with a particular one of the new items; and integrating the first trained machine-learning algorithm and the second trained machine-learning algorithms into a transaction workflow associated with transactions at transaction terminals to detect when ticket switching is present.

Aptly, training the first machine-learning algorithm further includes training the first machine-learning algorithm as a modified Convolutional Neural Network (CNN).

Aptly, training further includes modifying the modified CNN with a stochastic gradient descent optimization algorithm with a predefined step function to adjust a learning rate of the modified CNN.

Aptly, training the first machine-learning algorithm further includes obtaining a data set comprising the item images for the first set of items and the new item images and obtaining approximately 90% of the data set as a training data set for the training of the first machine-learning algorithm with approximately 10% of the data set remaining as a testing data set that comprises the new item images used in the testing of the first machine-learning algorithm.

Aptly, training the second machine-learning algorithms further includes training the second machine-learning algorithms as a plurality of different types of machine-learning algorithms.

Aptly, training the second machine-learning algorithms further includes training at least some of the second machine-learning algorithms as a binary classifier.

Aptly, training the second machine-learning algorithms further includes training at least some of the second machine-learning algorithms as a multi-class classifier.

Aptly, training the second machine-learning algorithms further includes training at least some of the second machine-learning algorithms as an Adaptive Boosting (AdaBoost) classifier.

Aptly, training the second machine-learning algorithms further includes training at least some of the second machine-learning algorithms as a Random Forest classifier.

Aptly, the method further comprises raising an alert during the transactions to the transaction terminals when ticket switching is detected for particular scanned items.

According to a third aspect of the present invention there is provided a system, comprising a transaction terminal comprising a scanner, a processor, and a non-transitory computer-readable storage medium comprising executable instructions for a transaction manager; a server comprising a server processor and a server non-transitory computer-readable storage medium comprising executable instructions for a first trained machine-learning algorithm trained as a modified Convolutional Neural Network, CNN, a plurality of second trained machine-learning algorithms, and an item security manager; wherein each of the plurality of second trained machine-learning algorithms comprises an item classifier; the transaction manager executed by the processor from the non-transitory computer-readable storage medium causing the processor to perform transaction operations comprising receiving an item code for an item scanned by the scanner during a transaction; providing the item code and an item image captured for the item to the server; and interrupting the transaction when an alert is received from the server during the transaction indicating that the item needs to be re-scanned **;** the first trained machine-learning algorithm, the second trained machine-learning algorithm, and the item security manager executed by the server processor from the server non-transitory computer-readable storage medium causing the server processor to perform security operations comprising passing, by the item security manager, the item image to the first trained machine-learning algorithm; producing, by the first trained machine-learning algorithm, a feature vector from the item image; selecting, by the item security manager, a particular second trained machine-learning algorithm based on the item code; passing, by the item security manager, the feature vector to the particular second trained machine-learning algorithm; producing, by the particular second trained machine-learning algorithm, an indication that indicates whether the feature vector is associated with the item defined by the item code, is not associated with the item, or that a decision cannot be made based on the feature vector whether or not the feature vector is associated with the item code **;** and sending, by the item security manager, the indication to the transaction terminal, when the indication is that a decision cannot be made, as a notification to the transaction terminal to request an operator of the transaction terminal to rescan the item code of the item that results in a new item image being captured and iterating back to the passing with the new item image as the item image.

Aptly, the transaction terminal is a Self-Service Terminal (SST) or a Point-Of-Sale (POS) terminal.

According to an embodiment, a method for computer vision-based ticket switching detection is presented. For example, an item image for an item is passed to a first trained machine-learning algorithm. A feature vector is obtained as output from the first trained machine-learning algorithm. A second trained machine-learning algorithm is selected based on an item code scanned from the item. The feature vector is provided as input to the second trained machine-learning algorithm and an indication is received from the second trained machine-learning algorithm as to whether the feature vector is associated with item code or is not associated with the item code.

Embodiments of the present invention will now be described hereinafter, by way of example only, with reference to the accompanying drawings in which:
FIG. 1A is a diagram of a system for computer vision-based ticket switching detection, according to an example embodiment.
FIG. 1B is a diagram of an overall process flow for computer vision-based ticket switching detection, according to an example embodiment.
FIG. 1C is a diagram of a method for training a machine-learning algorithm and classifiers for computer vision-based ticket switching detection, according to an example embodiment.
FIG. 1D is a diagram that visually depicts a training process associated with a machine learning algorithm for computer vision-based ticket switching detection, according to an example embodiment.
FIG. 1E is a diagram that visually depicts training processes associated with classifiers for computer vision-based ticket switching detection, according to an example embodiment.
FIG. 2 is a diagram of a method for computer vision-based ticket switching detection, according to an example embodiment.
FIG. 3 is a diagram of another method for computer vision-based ticket switching detection, according to an example embodiment.

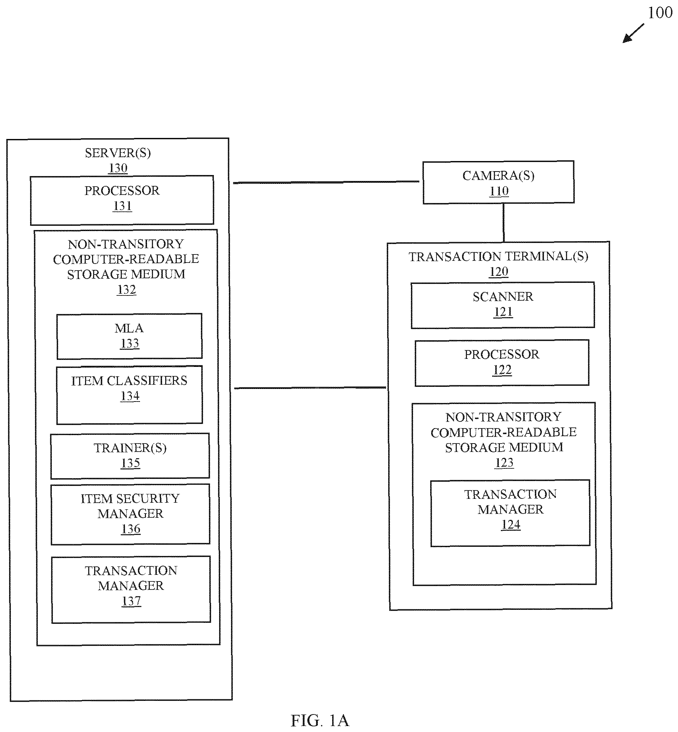

FIG. 1A is a diagram of a system 100 for computer vision-based ticket switching detection, according to an example embodiment. It is to be noted that the components are shown schematically in greatly simplified form, with only those components relevant to understanding of the embodiments being illustrated.

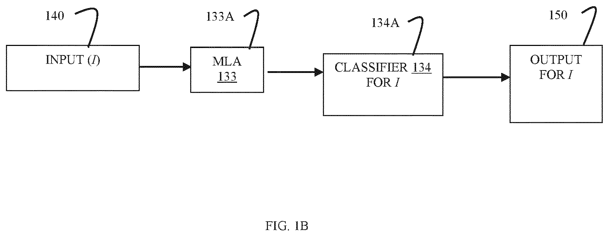

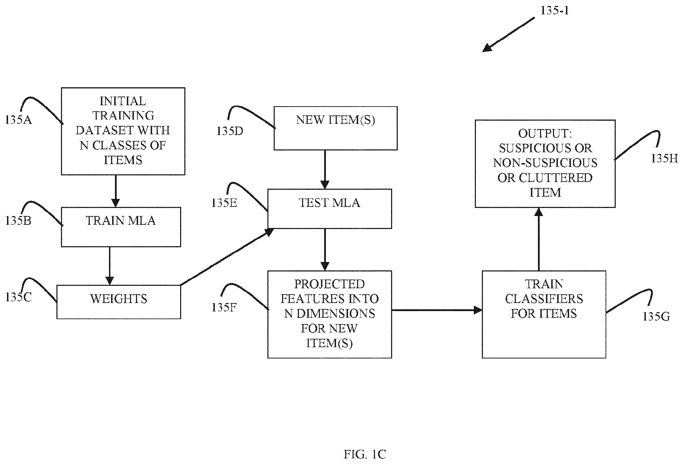

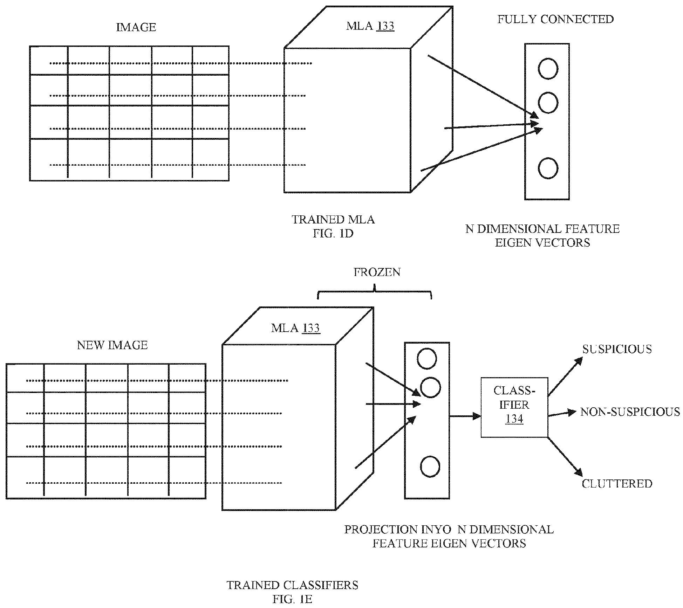

Furthermore, the various components (that are identified in the FIG. 1) are illustrated and the arrangement of the components is presented for purposes of illustration only. It is to be noted that other arrangements with more or less components are possible without departing from the teachings of ticket switching detection and determination, presented herein and below.

System 100 includes one or more cameras 110, one or more transaction terminals 120, and one or more servers 120.

The camera(s) 110 captures video and/or images of a designated area (such as, and by way of example only, a transaction area of a transaction terminal during a transaction); the video and/or images are streamed in real time to server 120 or any other network location or network file accessible from server 120. In an embodiment, the transaction area is an item scan area where item barcodes for items are scanned by scanner 121.

Each transaction terminal 120 comprises a scanner 121, a processor 122, and a non-transitory computer-readable storage medium 123 comprising executable instructions representing a transaction terminal 124.

Transaction manager 124 when executed by processor 122 from medium 123 causes processor 122 to perform operations discussed herein and below with respect to transaction manager 124.

It is to be noted that each transaction terminal 120 may comprise various other peripherals besides just scanner 121, such as and by way of example only, a touchscreen display, a keypad, a Personal Identification Number (PIN) pad, a receipt printer, a currency acceptor, a coin acceptor, a currency dispenser, a coin dispenser, a valuable media depository, a card reader (contact-based (magnetic and/or chip) card reader and/or contactless (wireless) card reader (Near-Field Communication (NFC), *etc*.))*,* one or more integrated cameras, a produce weigh scale (which may be integrated into scanner 121 as a composite device comprising an item barcode reader and weigh scale), a bagging weigh scale, a microphone, a speaker, a terminal status pole with integrated lights, *etc.*

Server 130 comprises a processor 131 and a non-transitory computer-readable storage medium 132. Medium 132 comprises executable instructions for a machine-learning algorithm 133, a plurality of item classifiers 134, one or more trainers 135, an item security manager 136, and a server-based transaction manager 137.

The executable instructions 133-137 when executed by processor 131 from medium 132 causes processor 131 to perform operations discussed herein and below with respect to 133-137.

As will be illustrated more completely herein and below, system 100 permits a machine-learning algorithm (MLA) 133 to be trained by trainer 135 on far fewer images of items than is conventionally required for computer vision-based item recognition from item images. The output of MLA 133 is a vector of features rather than an item identifier. Each item classifier 134 is then trained by trainer 135 to receive as input a vector of features for a given item and output a true or false classification that indicates whether an inputted vector (obtained as output from MLA 133 based on a given item image provided during a transaction on terminal 120) is (true - non-suspicious) or is not (false - suspicious) associated with the given item. Scanner 121 provides item barcodes scanned or imaged from the items; each item barcode linked to its corresponding item classifier 134. System 100 provides for improved fraud detection associated with ticket switching and provides a fraud determination much faster during transactions than has been conventionally achievable and system 100 provides a more precise and accurate determination of ticket switching than conventional approaches.

Ticket-switching is the deliberate act of switching the price/ticket (item barcode, Quick Response (QR) code, *etc*.) on an item with the intention of paying less than the item original price. It is common for thieves to scan the cheaper item while holding the original item (pricier) on top.

The main challenges for identifying ticket-switching are data collection, model training, maintenance, speed of training/evaluation, fraud accuracy determinations, memory footprint of models, and the speed at which models can be loaded into memory for processing (MLA 133 and corresponding item classifier 134 for a given item models are small and can be dynamically loaded in real-time for execution during a transaction).

Conventional approaches suffer from relatively low speed-accuracy trade-off (especially for the cases with small and low-quality image data sets); system 100 is a hybrid network that shows a remarkable and significant improvement in speed/accuracy trade-off threshold by utilizing the advantage of fast and accurate machine learning classifiers.

Trainer 135 is used to train MLA 133 on a large and diverse item classes for different items creating a master classification model for MLA 133 for all items. MLA 133 learns general features useful for identification and distinguishing of all item classes being modeled and is not prone to overfitting since it cannot make local tradeoffs that may be present in more limited sets of examples. Furthermore, MLA 133 is not used as a traditional item classifier role. Instead, MLA 133 produces as output (from item images provided in training by trainer 135) a feature eigen vector in N dimensional feature eigen vector space, each dimension representing a particular point/value of a given feature associated with the corresponding dimension of the N dimensional feature eigen vector space.

Conversely, conventional approaches train on each individual item class (based on item SKU or item code), which is slow, cumbersome, and prone to overfitting.

Once MLA 133 is trained, the N dimensional feature eigen vector space is defined by the trained MLA 133.

Next, new item images associated with items that were not included in the training session of MLA 133 are provided to the trained MLA 133. This results in the new items and their corresponding features being projected into the N dimensional feature eigen vector space in outputted feature eigen vectors. Each of the distinct item class feature eigen vectors has a corresponding classifier 134, which is trained on the feature eigen vector to determine whether a given feature eigen vector is an item associated with the given feature eigen vector or is not an item associated with the given feature eigen vector.

Once MLA 133 and the item classifiers 134 are trained by trainer 135, system 100 is ready for use during live transactions being processed on terminals 120 by transaction manager 124.

During operation of system 100, an item code that is scanned from an item by scanner 121 and the item code is provided to transaction manager 124. Simultaneously, camera 110 captures an image of the scanned item as it passes over scanner 121. Transaction manager 124 provides the item code to transaction manager 137 of server 130 and item security manager 136 obtains the item image. Transaction manager 137 looks up the item details and pricing, which is returned to transaction manager 124 while item security manager 136 provided the item image as input to trained MLA 133. Trained MLA 133 provides as output a feature eigen vector of N dimensions for the item image. Item security manager 136 uses the item code received by transaction manager 317 to obtain the corresponding trained item classifier 134 and the feature eigen vector of N dimensions is provided as input to the corresponding item classifier 134. Corresponding item classifier 134 outputs a suspicious (false) value or a non-suspicious (true) value. If a non-suspicious value is returned, then no further processing is needed as the item scanned is identified as the item associated with the item image, which indicates that there was no ticket switching by the customer associated with the transaction. However, if a suspicious value is returned, item security manager 136 sends an alert to transaction manager 137, transaction manager 137 receives the alert and suspends processing of the transaction and requests intervention from an attendant or a supervisor to verify that the item code scanned matches the actual item that is being purchased for the transaction.

In an embodiment, the returned feature eigen vector from trained MLA 133 may not be capable of being determined whether or not it is the item associated with the captured item image by the corresponding trained item classifier 134. This can be for a variety of reasons, such as a poor-quality image taken, an obscured item image that is obscured by the hand of an operator of terminal 110, an obscured item image that is obscured by some other object or item, *etc.* In such cases, the corresponding trained item classifier returns a "cluttered" item value, which is an indication to item security manager 136 that a ticket switching determination cannot be made based on the captured item image. In such situations, a notification can be sent to transaction manager 124 indicating that the operator should rescan the most-recent or last scanned item code for the last processed item. Alternatively, a transaction interruption may be raised for an attendant or supervisor to rescan the item in question. In fact, the action taken by item security manager 136 and transaction manager 124 can be customized based on a variety of factors (time of day, identity of terminal operator, identity of customer, running total transaction price, calendar day, day of week, scanned item code for the item in question, known probability of ticket switching associated with the item code, and any other enterprise-defined factors).

In an embodiment, MLA 133 is a customized Convolutional Neural Network (CNN) that produces the feature eigen vectors from an inputted item image and the item classifiers 134 are customized machine learning classifiers that produces a true, false, and, optionally a cluttered value (as discussed above) based on an inputted feature eigen vector produced as output from an item image by MLA 133.

System 100 is a hybrid approach that utilizes general feature extraction from a set of n diverse item class images to train MLA 133 to produce feature eigen vectors mapped to n dimensions for the item images. Stacked on top of the trained MLA 133 are individual trained item classifiers 134. The hybrid approach leverages transfer learning from the trained MLA 133 to the stacked trained item classifiers 134. This provides a scalable model featuring a significant reduction in computational complexity and a major increment in processing speed that determines whether or not a given item image and a given scanned item bar code is or is not associated with ticket switching. The trained MLA 133 is only trained once and does not need retrained and the once trained MLA 133 can be used for producing feature eigen vectors on item images that were not used during the single training session. The resulting feature eigen vectors for the new items are handled appropriate when training their corresponding item classifiers 134. System 100 also shows a remarkable reduction in memory footprint (memory usage/load) by storing only a single trained MLA 133 in memory and loading the needed item classifiers 134 as needed. This hybrid approach/model supports rapid training for new items that are transferrable building high quality classification models as needed. Finally, system 100 (hybrid model) provides a significant improvement in accuracy associated with detecting ticket switching by adding a false-positive filter cascade to eliminate common conditions that arise in real-world retail applications.

FIG. 1B is a diagram of an overall process flow for computer vision-based ticket switching detection, according to an example embodiment.

At 140 an item image is provided as input for an item captured passing over scanner 121 during a transaction at terminal 120. Transaction manager 124 also provides an item barcode scanned off the item by scanner 121. Item security manager 136 provides the item image as input to the trained MLA 133 at 133A. Trained MLA 133 produces as output of feature eigen vector for the inputted item image, the feature eigen vector have values associated with N values where N is the number of dimensions or unique features across the initial training set of item images for the diverse item classes used in the training by trainer 135. Item security manager 136 retrieves a corresponding trained classifier associated with the item barcode of the item and provides the feature eigen vector produced as output at 133A to the corresponding classifier 134 at 134A. The corresponding item classifier 134 returns as output an indication as to whether the feature eigen vector is associated with an item for which it was trained, is not associated with an item for which it was trained, or is cluttered indicating that the original provided item image for which the feature eigen vector was derived as defective in terms of quality or occluded in some manner (such that a determination as to whether the scanned item barcode is known to be the item image or known not to be the item image. Item security manager 136 takes the output at 150 and determines whether to raise an alert or a notification to transaction manager 124 to suspend the transaction or allow the transaction to continue.

FIG. 1C is a diagram of a method 135-1 for training a machine-learning algorithm and classifiers for computer vision-based ticket switching detection, according to an example embodiment.

At 135A, trainer 135 processes an initial training dataset with N classes of diverse items.

At 135B, trainer 135 trains MLA 133 on item images for each of the N classes of diverse items.

At 135C, trainer 135 notes weights of the items being trained for each of the N classes.

At 135D, trainer 135 obtains new items that were not associated with the training or the N classes of diverse items during training of MLA 133.

At 135E, trainer 135 tests the already trained MLA on the new items with images for the new items and weights noted for the new items.

At 135F, trainer 135 obtains projected features into N feature dimensions for the new items. That is, the new items are projected into the N dimensional feature eigen vector space of the N diverse items that were used during the training of MLA 133.

At 135G, trainer 135 trains a classifier based on the item barcodes and the feature eigen vectors associated with the corresponding item barcodes for each classifier 134 to determine whether a given feature eigen vector is to be considered an item, not an item, or cluttered (defective in some manner).

At 135H, trainer 135 verifies the appropriate output is obtained and the appropriate accuracy is obtained during training of each classifier 134.

In an embodiment, approximately a 1000 set of unique items representing a diverse set of item classes was used to train MLA 133 as modified CNN classifier (modified ResNet18) that produces feature eigen vectors for each item image (approximately 500 item images per item barcode or class were tested). Next, the trained CNN was tested for new item images associated with new items that were not in the initial 1000 set of unique items to obtain new feature eigen vectors for each image in the item class. Next, different machine learning classifiers (AdaBoost, Random Forest, linear SVM, and Logistic Regression) were trained on each set of feature eigen vectors associated with a given item class. To speed up optimization a stochastic gradient descent (SGD) optimization algorithm with predefined schedule step function to adjust the learning rate was used. The training data set (500 images for each item in the 1000 set of unique items) was split into 90% training and 10% validation). Performance of training and validation were plotted as a function of a number of epochs. After 100 epochs, the training and validation errors reaches less than 5% and 4%, respectively, which demonstrated the performance of the hybrid model. Once the master CNN model was trained, the model was applied to first items belonging to the training set and then new items (not in the training set). It was observed that the outcome probability vector of CNN for the items in the training set spikes at a particular class which belongs to the original item. For the new items, a distribution of classes being populated was observed. This resembles a feature eigen vector space in linear algebra. Finally, different machine learning classifiers were trained on the obtained feature eigen vectors for binary and multi-class classifications, respectively. The validation error was plotted for 42 new items trained with different machine learning classifiers. As a metric to validate classification, confusion matrix was plotted for both binary and multi-class classification for AdaBoost. The results show AdaBoost and Random-Forest performing significantly good with less than 4% error for the new items. It was observed that less than 3.4% validation error (more than 99% mean average recall) for 42 new items using one against all binary AdaBoost and less than 9% error using multi-class AdaBoost classifier. Individual CNNs were also trained for each item claims resulting in more than 6% validation errors for the 100 set of unique items and more than 16% validation errors for the new items. This demonstrated that the hybrid modified feature-vector CNN/classifiers showed improved accuracy and performs better than individual CNNs with remarkable improvement in speed/accuracy tradeoff threshold.

FIG. 1D is a diagram that visually depicts a training process associated with a machine learning algorithm for computer vision-based ticket switching detection, according to an example embodiment.

Each image for each item class (item barcode) is passed as input to MLA 133 resulting in sets of feature eigen vectors of N dimensions (N classes) per unique item that are mapped. Once trained on the diverse set of item classes, MLA 133 does not require retraining for purposes of handling new item class images for new items associated with new and untrained item barcodes.

FIG. 1E is a diagram that visually depicts training processes associated with classifiers for computer vision-based ticket switching detection, according to an example embodiment.

After the MLA 133 is trained once on the diverse set of items, new items can be passed as input to the trained MLA 133 with the trained MLA 133 frozen (remaining unchanged). The MLA 133 projects the new image for the new item into the N dimensional feature eigen vector space. Specific features associated with these new items can be accounted for through training of a specific classifier 134 for each new item based on each item's barcode. This results in classifiers 134 that can account for feature eigen vectors projected into the N dimensional feature eigen vector space for improved accuracy on determining whether a new item is or is not associated with an item barcode that was scanned during a transaction. Classifiers 134 can be binary or multiclass and may, as illustrated in FIG. 1E determine when an original image for which the frozen and trained MLA 133 produced a feature eigen vector was defective in some manner based on the provided feature eigen vector (this is illustrated as the cluttered output value in FIG. 1E).

System 100 permits creation of an N dimensional feature eigen vector space, new items not used in training are projected to obtain new feature eigen vectors, and a new machine-learning classifier is added for each new item to determine whether the new feature eigen vector is or is not associated with a scanned barcode for an item during a transaction.

In an embodiment, transaction terminal 120 is a Self-Service Terminal (SST) operated by a customer performing a self-checkout.

In an embodiment, transaction terminal 120 is a Point-Of-Sale (POS) terminal operated by a clerk or an attendant during an assisted customer checkout.

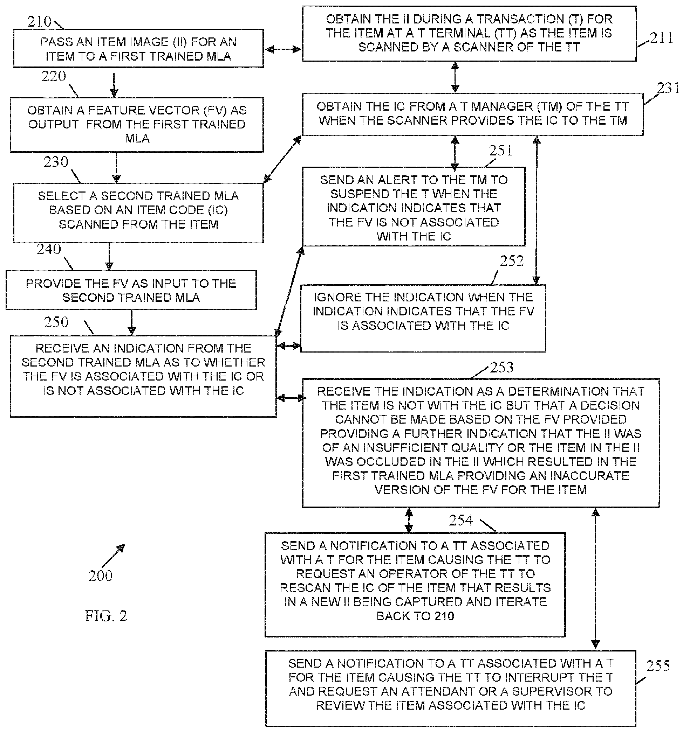

The above-noted embodiments and other embodiments are now discussed with reference to FIGS. 2-3.

FIG. 2 is a diagram of a method 200 for computer vision-based ticket switching detection, according to an example embodiment. The software module(s) that implements the method 200 is referred to as an "item security manager." The item security manager is implemented as executable instructions programmed and residing within memory and/or a non-transitory computer-readable (processor-readable) storage medium and executed by one or more processors of a device. The processor(s) of the device that executes the item security manager are specifically configured and programmed to process the item security manager. The item security manager may have access to one or more network connections during its processing. The network connections can be wired, wireless, or a combination of wired and wireless.

In an embodiment, the item security manager executes on server 120. In an embodiment, the server 120 is one of multiple servers that logically cooperate as a single server representing a cloud processing environment (cloud).

In an embodiment, the device that executes the item security manager is transaction terminal 120 (POS terminal or SST terminal).

In an embodiment, the item security manager is keyframe item security manager 136.

At 210, the item security manager pass an item image for an item to a first trained machine-learning algorithm (MLA). In an embodiment, the first trained MLA is MLA 133.

In an embodiment, at 211, the item security manager obtains the item image during a transaction for the item at a transaction terminal as the item is scanned by a scanner of the transaction terminal.

At 220, the item security manager obtains a feature vector as output from the first trained MLA. This was discussed in detail above with reference to FIGS. 1A-1E. In an embodiment, the feature vector is the feature eigen vector discussed above.

At 230, the item security manager selects a second trained MLA from a plurality of available second trained MLAs based on an item code (barcode, QR code, *etc*.) for the item.

In an embodiment of 211 and 230, at 231, the item security manager obtains the item code from a transaction manager of the transaction terminal when the scanner provides the item code to the transaction manager.

At 240, the item security manager provides the feature vector as input to the second trained MLA.

At 250, the item security manager receives an indication from the second trained MLA as to whether the feature vector is associated with the item code or is not associated with the item code.

In an embodiment of 231 and 250, at 251, the item security manager sends an alert to the transaction manager to suspend the transaction when the indication indicates that the feature vector is not associated with the item code.

In an embodiment of 231 and 250, at 252, the item security manager ignores the indication when the indication indicates that the feature vector is associated with the item code.

In an embodiment, at 253, the item security manager receives the indication as a determination that the item is not associated with the item code but that a decision cannot be made based on the feature vector provided. This provides a further indication that the item image was of an insufficient quality or that the item in the item image was occluded in the item image, which resulted in the first trained MLA providing an inaccurate version of the feature vector for the item.

In an embodiment of 253 and at 254, the item security manager sends a notification to a transaction terminal associated with a transaction for the item causing the transaction terminal to request an operator of the transaction terminal to rescan the item code of the item that results in a new item image being captured and causing the item security manager to iterate back to 210 with the new item image as the item image.

In an embodiment of 253 and at 255, the item security manager sends a notification to a transaction terminal associated with a transaction for the item causing the transaction terminal to interrupt the transaction and request an attendant or a supervisor to review the item associated with the item code.

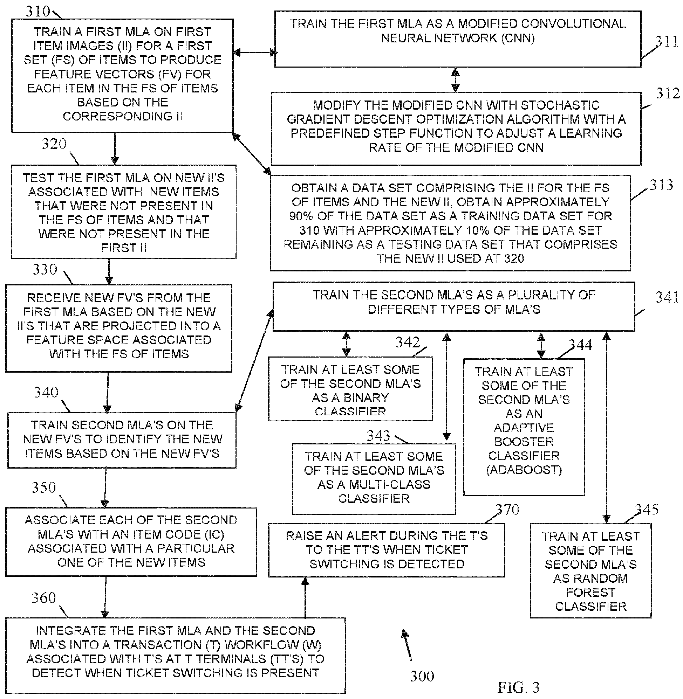

FIG. 3 is a diagram of a method 300 for computer vision-based ticket switching detection, according to an example embodiment. The software module(s) that implements the method 300 is referred to as a "ticket switching training and detection manager." The ticket switching training and detection manager is implemented as executable instructions programmed and residing within memory and/or a non-transitory computer-readable (processor-readable) storage medium and executed by one or more processors of a device. The processor(s) of the device that executes the ticket switching training and detection manager are specifically configured and programmed to process the ticket switching training and detection manager. The ticket switching training and detection manager may have access to one or more network connections during its processing. The network connections can be wired, wireless, or a combination of wired and wireless.

In an embodiment, the device that executes the ticket switching training and detection manager is server 120. In an embodiment, server 120 is one of multiple servers that cooperate and logically present as a single server associated with a cloud processing environment.

In an embodiment, the device that executes the ticket switching training and detection manager is transaction terminal 120 (POS terminal or SST).

In an embodiment, the ticket switching training and detection manager is all of, or some combination of, MLA 133, classifiers 134, trainer 135, item security manager 136, and/or method 200.

The ticket switching training and detection manager represents another and, in some ways, an enhanced processing perspective of what was discussed above for the method 200.

At 310, the ticket switching training and detection manager trains a first MLA on first item images for a first set of items to produce feature vectors for each item in the first set of items based on the corresponding item images.

In an embodiment, at 311, the ticket switching training and detection manager trains the first MLA as a modified Convolutional Neural Network (CNN).

In an embodiment of 311 and at 312, the ticket switching training and detection manager modifies the modified CNN with stochastic gradient descent optimization algorithm with a predefined step function to adjust a learning rate of the modified CNN.

In an embodiment, at 313, the ticket switching training and detection manager obtains a data set comprising the item images for the first set of items and the new item images. The ticket switching training and detection manager obtains approximately 90% of the data set as a training data set for 310 with approximately 10% of the data set remaining as a testing data set that comprises the new item images processed at 320 below.

At 320, the ticket switching training and detection manager tests the first MLA on new item images associated with new items that were not present in the first set of items and that were not present in the first item images.

At 330, the ticket switching training and detection manager receives new feature vectors from the first MLA based on the new item images that are projected into a feature space associated with the first set of items. In an embodiment, the feature space is the N dimensional feature eigen vector space discussed above.

At 340, the ticket switching training and detection manager trains second MLAs on the new feature vectors to identify the new items based on the new feature vectors.

In an embodiment, at 341, the ticket switching training and detection manager trains the second MLAs as a plurality of different types of MLAs.

In an embodiment of 341 and at 342, the ticket switching training and detection manager trains at least some of the second MLAs as a binary classifier.

In an embodiment of 341 and at 343, the ticket switching training and detection manager trains as lease some of the second MLAs as a multi-class classifier.

In an embodiment of 341 and at 344, the ticket switching training and detection manager trains at least some of the second MLAs as an Adaptive Booster (AdaBoost) classifier.

In an embodiment of 341 and at 345, the ticket switching training and detection manager trains at least some of the second MLAs as a Random Forest classifier.

At 350, the ticket switching training and detection manager associates each of the second MLAs with an item code associated with a particular one of the new items.

At 360, the ticket switching training and detection manager integrates the first MLA and the second MLAs into a transaction processing workflow associated with transaction at transaction terminals to detect when ticket switching is present (detect when an item code scanned during the workflow for a given transaction does not match or correspond to an item image captured for the scanned item code indicating that the item being purchased has an incorrect item code on that item). The transaction workflow was discussed above with FIGS. 1A-1E.

In an embodiment, at 370, the ticket switching training and detection manager raises an alert during the transaction to the corresponding transaction terminals when ticket switching is detected permitting transaction managers processing on the terminals to interrupt the transactions and request rescanning of item bar codes in question or request that an attendant or a supervisor manually inspect the items during the transactions and override the interruptions.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure.

## Claims

1. A method, comprising:
passing an item image captured for an item to a first trained machine-learning algorithm trained as a modified Convolutional Neural Network, CNN;
obtaining a feature vector as output from the first trained machine-learning algorithm;
selecting a second trained machine-learning algorithm based on an item code scanned from the item;
wherein the second trained machine-learning algorithm comprises an item classifier;
providing the feature vector as input to the second trained machine-learning algorithm;
receiving an indication from the second trained machine-learning algorithm as to whether the feature vector is associated with the item code, is not associated with the item code, or that a decision cannot be made based on the feature vector whether or not the feature vector is associated with the item code**;** and
when the indication is that a decision cannot be made, sending a notification to a transaction terminal to request an operator of the transaction terminal to rescan the item code of the item that results in a new item image being captured and iterating back to the passing with the new item image as the item image.

2. The method of claim 1, wherein passing further includes obtaining the item image during a transaction for the item at the transaction terminal as the item is scanned by a scanner of the transaction terminal.

3. The method of claim 2, wherein selecting further includes obtaining the item code from a transaction manager of the transaction terminal when the scanner provides the item code to the transaction manager.

4. The method of claim 3 further comprising, sending an alert to the transaction manager to suspend the transaction when the indication indicates that the feature vector is not associated with the item code.

5. A system, comprising:
a transaction terminal comprising a scanner, a processor, and a non-transitory computer-readable storage medium comprising executable instructions for a transaction manager;
a server comprising a server processor and a server non-transitory computer-readable storage medium comprising executable instructions for a first trained machine-learning algorithm trained as a modified Convolutional Neural Network, CNN, a plurality of second trained machine-learning algorithms, and an item security manager;
wherein each of the plurality of second trained machine-learning algorithms comprises an item classifier;
the transaction manager executed by the processor from the non-transitory computer-readable storage medium causing the processor to perform transaction operations comprising:
receiving an item code for an item scanned by the scanner during a transaction;
providing the item code and an item image captured for the item to the server; and
interrupting the transaction when an alert is received from the server during the transaction indicating that the item needs to be re-scanned ;
the first trained machine-learning algorithm, the second trained machine-learning algorithm, and the item security manager executed by the server processor from the server non-transitory computer-readable storage medium causing the server processor to perform security operations comprising:
passing, by the item security manager, the item image to the first trained machine-learning algorithm;
producing, by the first trained machine-learning algorithm, a feature vector from the item image;
selecting, by the item security manager, a particular second trained machine-learning algorithm based on the item code;
passing, by the item security manager, the feature vector to the particular second trained machine-learning algorithm;
producing, by the particular second trained machine-learning algorithm, an indication that indicates whether the feature vector is associated with the item defined by the item code, is not associated with the item, or that a decision cannot be made based on the feature vector whether or not the feature vector is associated with the item code ; and
sending, by the item security manager, the indication to the transaction terminal, when the indication is that a decision cannot be made, as a notification to the transaction terminal to request an operator of the transaction terminal to rescan the item code of the item that results in a new item image being captured and iterating back to the passing with the new item image as the item image.

6. The system of claim 5, wherein the transaction terminal is a Self-Service Terminal (SST) or a Point-Of-Sale (POS) terminal.

## Patentansprüche

1. Verfahren, umfassend:
Übergeben eines Objektbildes, das für ein Objekt erfasst wurde, an einen ersten trainierten Maschinenlernalgorithmus, der als ein modifiziertes neuronales Faltungsnetzwerk, CNN, trainiert ist;
Erhalten eines Merkmalsvektors als Ausgabe von dem ersten trainierten Maschinenlernalgorithmus;
Auswählen eines zweiten trainierten Maschinenlernalgorithmus basierend auf einem von dem Objekt gescannten Objektcode;
wobei der zweite trainierte Maschinenlernalgorithmus einen Objektklassifikator umfasst;
Bereitstellen des Merkmalsvektors als Eingabe an den zweiten trainierten Maschinenlernalgorithmus;
Empfangen einer Angabe von dem zweiten trainierten Maschinenlernalgorithmus, ob der Merkmalsvektor mit dem Objektcode assoziiert ist, nicht mit dem Objektcode assoziiert ist oder ob keine Entscheidung basierend auf dem Merkmalsvektor getroffen werden kann, ob der Merkmalsvektor mit dem Objektcode verknüpft ist oder nicht; und
wenn die Angabe ist, dass keine Entscheidung getroffen werden kann, Senden einer Benachrichtigung an ein Transaktionsterminal, um einen Bediener des Transaktionsterminals aufzufordern, den Objektcode des Objekts erneut zu scannen, was dazu führt, dass ein neues Objektbild erfasst wird und zurück zum Übergeben mit dem neuen Objektbild als Objektbild iteriert wird.

2. Verfahren nach Anspruch 1, wobei das Übergeben ferner Erhalten des Objektbilds während einer Transaktion für das Objekt an dem Transaktionsterminal einschließt, wenn das Objekt von einem Scanner des Transaktionsterminals gescannt wird.

3. Verfahren nach Anspruch 2, wobei das Auswählen ferner das Erhalten des Objektcodes von einem Transaktionsmanager des Transaktionsterminals einschließt, wenn der Scanner den Objektcode dem Transaktionsmanager bereitstellt.

4. Verfahren nach Anspruch 3, ferner umfassend Senden einer Warnung an den Transaktionsmanager, um die Transaktion auszusetzen, wenn die Angabe angibt, dass der Merkmalsvektor nicht mit dem Objektcode assoziiert ist.

5. System, umfassend:
ein Transaktionsterminal, umfassend einen Scanner, einen Prozessor und ein nichtflüchtiges computerlesbares Speichermedium, umfassend ausführbare Anweisungen für einen Transaktionsmanager;
einen Server, umfassend einen Serverprozessor und ein nichtflüchtiges computerlesbares Serverspeichermedium, umfassend ausführbare Anweisungen für einen ersten trainierten Maschinenlernalgorithmus, trainiert als ein modifiziertes neuronales Faltungsnetzwerk, CNN, eine Vielzahl von zweiten trainierten Maschinenlernalgorithmen und einen Objektsicherheitsmanager;
wobei jeder von der Vielzahl von zweiten trainierten Maschinenlernalgorithmen einen Objektklassifikator umfasst;
wobei der Transaktionsmanager, ausgeführt durch den Prozessor von dem nichtflüchtigen computerlesbaren Speichermedium, bewirkt, dass der Prozessor Transaktionsoperationen durchführt, umfassend:
Empfangen eines Objektcodes für ein Objekt, das durch den Scanner während einer Transaktion gescannt wird;
Bereitstellen des Objektcodes und eines Objektbildes, das für das Objekt erfasst wurde, an den Server; und
Unterbrechen der Transaktion, wenn während der Transaktion eine Warnung von dem Server empfangen wird, die angibt, dass das Objekt erneut gescannt werden muss;
den ersten trainierten Maschinenlernalgorithmus, den zweiten trainierten Maschinenlernalgorithmus und den Objektsicherheitsmanager, ausgeführt von dem Serverprozessor von dem nichtflüchtigen computerlesbaren Serverspeichermedium, die bewirken, dass der Serverprozessor Sicherheitsoperationen durchführt, umfassend:
Übergeben des Objektbildes durch den Objektsicherheitsmanager an den ersten trainierten Maschinenlernalgorithmus;
Erzeugen eines Merkmalsvektors aus dem Objektbild durch den ersten trainierten Maschinenlernalgorithmus;
Auswählen eines bestimmten zweiten trainierten Maschinenlernalgorithmus durch den Objektsicherheitsmanager basierend auf dem Objektcode;
Übergeben des Merkmalsvektors durch den Objektsicherheitsmanager an den bestimmten zweiten trainierten Maschinenlernalgorithmus;
Erzeugen einer Angabe durch den bestimmten zweiten trainierten Maschinenlernalgorithmus, die angibt, ob der Merkmalsvektor mit dem durch den Objektcode definierten Objekt assoziiert ist, nicht mit dem Objekt assoziiert ist oder ob keine Entscheidung basierend auf dem Merkmalsvektor getroffen werden kann, ob der Merkmalsvektor mit dem Objektcode assoziiert ist oder nicht; und
Senden der Angabe durch den Objektsicherheitsmanager an das Transaktionsterminal, wenn die Angabe ist, dass keine Entscheidung getroffen werden kann, als eine Benachrichtigung an das Transaktionsterminal, um einen Bediener des Transaktionsterminals aufzufordern, den Objektcode des Objekts erneut zu scannen, was dazu führt, dass ein neues Objektbild erfasst wird und zurück zum Übergeben mit dem neuen Objektbild als Objektbild iteriert wird.

6. System nach Anspruch 5, wobei das Transaktionsterminal ein Selbstbedienungs-Terminal (SST) oder ein Verkaufsstellen-(POS-)Terminal ist.

## Revendications

1. Procédé, comprenant :
la transmission d'une image d'article capturée pour un article à un premier algorithme d'apprentissage machine entraîné en tant que réseau neuronal convolutionnel, CNN, modifié ;
l'obtention d'un vecteur de caractéristiques en tant que sortie du premier algorithme d'apprentissage machine entraîné ;
la sélection d'un second algorithme d'apprentissage machine entraîné sur la base d'un code d'article scanné à partir de l'article ;
ledit second algorithme d'apprentissage machine entraîné comprenant un classificateur d'articles ;
la fourniture du vecteur de caractéristiques en tant qu'entrée au second algorithme d'apprentissage machine entraîné ;
la réception d'une indication du second algorithme d'apprentissage machine entraîné indiquant si le vecteur de caractéristiques est associé au code d'article, n'est pas associé au code d'article, ou qu'une décision ne peut pas être prise sur la base du vecteur de caractéristiques si le vecteur de caractéristiques est associé ou non au code d'article ; et
lorsque l'indication est qu'une décision ne peut pas être prise, l'envoi d'une notification à un terminal de transactions pour demander à un opérateur du terminal de transactions de scanner de nouveau le code d'article de l'article qui entraîne la capture d'une nouvelle image d'article et de revenir à la transmission avec la nouvelle image d'article en tant qu'image d'article.

2. Procédé selon la revendication 1, ladite transmission comprenant en outre l'obtention de l'image d'article pendant une transaction pour l'article au niveau du terminal de transactions lorsque l'article est balayé par un scanner du terminal de transactions.

3. Procédé selon la revendication 2, ladite sélection comprenant en outre l'obtention du code d'article à partir d'un gestionnaire de transactions du terminal de transactions lorsque le scanner fournit le code d'article au gestionnaire de transactions.

4. Procédé selon la revendication 3, comprenant en outre l'envoi d'une alerte au gestionnaire de transactions pour suspendre la transaction lorsque l'indication indique que le vecteur de caractéristiques n'est pas associé au code d'article.

5. Système, comprenant :
un terminal de transactions comprenant un scanner, un processeur et un support de stockage non transitoire lisible par ordinateur comprenant des instructions exécutables pour un gestionnaire de transactions ;
un serveur comprenant un processeur de serveur et un support de stockage lisible par ordinateur non transitoire de serveur comprenant des instructions exécutables pour un premier algorithme d'apprentissage machine entraîné en tant que réseau neuronal convolutionnel, CNN, modifié, une pluralité de seconds algorithmes d'apprentissage machine entraînés, et un gestionnaire de sécurité d'articles ;
chacun de la pluralité de seconds algorithmes d'apprentissage machine entraînés comprenant un classificateur d'articles ;
le gestionnaire de transactions exécuté par le processeur à partir du support de stockage non transitoire lisible par ordinateur amenant le processeur à réaliser des opérations de transactions comprenant :
la réception d'un code d'article pour un article scanné par le scanner lors d'une transaction ;
la fourniture du code d'article et d'une image d'article capturée pour l'article au serveur ; et
l'interruption de la transaction lorsqu'une alerte est reçue du serveur au cours de la transaction indiquant que l'article doit être scanné de nouveau ;
le premier algorithme d'apprentissage machine entraîné, le second algorithme d'apprentissage machine entraîné et le gestionnaire de sécurité d'articles exécuté par le processeur de serveur à partir du support de stockage non transitoire lisible par ordinateur du serveur amenant le processeur de serveur à réaliser des opérations de sécurité comprenant :
la transmission, par le gestionnaire de sécurité d'articles, de l'image de l'article au premier algorithme d'apprentissage machine entraîné ;
la production, par le premier algorithme d'apprentissage machine entraîné, d'un vecteur de caractéristiques à partir de l'image d'article ;
la sélection, par le gestionnaire de sécurité d'articles, d'un second algorithme d'apprentissage machine entraîné particulier sur la base du code d'article ;
la transmission, par le gestionnaire de sécurité d'articles, du vecteur de caractéristiques au second algorithme d'apprentissage machine entraîné particulier ;
la production, par le second algorithme d'apprentissage machine entraîné particulier, d'une indication qui indique si le vecteur de caractéristiques est associé à l'article défini par le code d'article, n'est pas associé à l'article, ou qu'une décision ne peut pas être prise sur la base du vecteur de caractéristiques si le vecteur de caractéristiques est associé ou non au code d'article ; et
l'envoi, par le gestionnaire de sécurité d'articles, de l'indication au terminal de transactions, lorsque l'indication est qu'une décision ne peut pas être prise, en tant que notification au terminal de transactions pour demander à un opérateur du terminal de transactions de scanner de nouveau le code d'article de l'article qui entraîne la capture d'une nouvelle image d'article et de revenir à la transmission avec la nouvelle image d'article en tant qu'image d'article.

6. Système selon la revendication 5, ledit terminal de transactions étant un terminal en libre-service (SST) ou un terminal de point de vente (POS).
